# FASCICULE DE BREVET EUROPEEN

(11) **EP 1 065 626 B1**
(45) Date de publication et mention de la délivrance du brevet: **17.04.2002**
(21) Numéro de dépôt: 00401707.5
(22) Date de dépôt: 15.06.2000
(51) Int. Cl.: G06K 19/073, G06K 7/00

(54) **Gestion de la mémoire d'une carte à puce pour les modes d'économie d'énergie dans un téléphone mobile**
Chipkarten-Speicherverwaltung für Energiesparmoden in einem Mobiltelefon
Chip card memory management for power saving modes in a mobile phone

(30) Priorité: 30.06.1999 FR 9908524
(43) Date de publication de la demande: 03.01.2001
(73) Titulaire: SAGEM S.A., 75015 Paris (FR)
(72) Inventeur: Bertiaux, Philippe, 95000 Cergy (FR)
(74) Mandataire: Schmit, Christian Norbert Marie

(56) Documents cités:
- EP-A- 0 599 244
- US-A- 5 247 164
- US-A- 5 410 714

## Description

La présente invention a pour objet un procédé de gestion d'une consommation électrique d'une carte à puce dans un téléphone mobile. Le but de l'invention est d'augmenter l'autonomie d'un téléphone mobile muni d'une telle carte à puce.

On différencie des cartes à puce pour de tels téléphones mobiles par rapport à des fonctions qu'elles sont capables de réaliser. Ainsi, on distingue tout d'abord des cartes à puce phase 2 dites cartes SIM phase 2 (pour Subscriber Identity Module en anglais, module d'identité d'abonné en français). Par rapport à une phase 1, une carte à puce phase 2 est une carte à puce qui réalise, de manière perfectionnée, seulement des fonctions sécurisées de calcul et de contrôle de données. Elle réalise aussi des fonctions de mémorisation dans une mémoire interne. De plus, une carte à puce phase 2 ne peut envoyer des informations au téléphone mobile que si elle y a été autorisée par ce dernier. Une évolution des cartes à puce phase 2 a conduit aux cartes à puce phase 2+ dites cartes SIM phase 2+ ou encore cartes SIM toolkit. Une carte à puce phase 2+ est capable, à l'inverse d'une carte à puce phase 2, d'envoyer des commandes à un téléphone mobile. Généralement, ces commandes dites pro-actives permettent à une carte à puce de gérer des dialogues de type homme/machine entre un téléphone mobile et un utilisateur de ce téléphone mobile en utilisant notamment un écran et/ou un clavier de ce téléphone mobile comme interface de dialogue.

L'invention s'applique plus particulièrement aux cartes à puce phase 2+. Le but de l'invention est de permettre une gestion de la consommation électrique de ces cartes à puce phase 2+ sans perte d'informations.

Actuellement, des procédés de gestion de consommation électrique de cartes à puce ne s'appliquent qu'à des cartes à puce phase 2. Une carte à puce phase 2 peut être mise en veille à n'importe quel moment. En effet, une mise en veille se fait sur ordre du téléphone mobile. Généralement, une mise en veille est effectuée après que la carte à puce phase 2 ait fini une tâche commandée par le téléphone mobile.

Une application du procédé de gestion d'une consommation électrique d'une carte à puce phase 2 à une carte à puce phase 2+ présente des problèmes. En effet, la carte à puce phase 2+ peut produire des commandes. Ainsi, une architecture d'une telle carte à puce comporte notamment, en plus d'un microprocesseur et d'une mémoire non-volatile de type EEPROM, une mémoire volatile de lecture écriture de type RAM. Cette mémoire RAM a pour fonction de garder temporairement en mémoire un contexte de travail nécessaire pour produire ultérieurement notamment des commandes pro-actives. En conséquence, une coupure d'alimentation de la carte à puce phase 2+ par le téléphone mobile, comme dans l'état de la technique, conduit à une perte immédiate des informations de la mémoire RAM. Ceci n'est pas acceptable puisqu'une commande de mise en veille se fait sans acquittement de la carte à puce. On perd ainsi toutes les données qui sont utilisées ou qui allait être utilisées et qui n'ont pas été sauvegardées dans une mémoire autre que dans la mémoire RAM de la carte à puce phase 2+.

La présente invention a pour objet de remédier à ces problèmes en proposant un procédé de gestion d'une consommation électrique d'une carte à puce. Avec le procédé de l'invention, on contrôle, avant de la placer dans un état de veille, des caractéristiques de la carte à puce insérée dans le téléphone mobile et on détermine s'il y a lieu de réaliser éventuellement une sauvegarde, dans ce cas on détermine aussi un lieu de sauvegarde, ou non.

Ainsi , avec le procédé de l'invention, on peut mettre dans un état de veille, et en toute sécurité, une carte à puce phase 2+. En conséquence, on améliore une autonomie d'un téléphone mobile comportant une telle carte à puce phase 2+ puisqu'il n'est plus nécessaire de maintenir cette carte active en permanence.

La présente invention concerne donc un procédé de gestion d'une consommation électrique d'une carte à puce dans un téléphone mobile dans lequel :
- on envoie à la carte à puce un message d'information concernant le téléphone mobile,
- on lit un contenu d'un message d'identification envoyé par la carte à puce au téléphone mobile,
caractérisé en ce que :
- on envoie à la carte à puce une requête de mise en veille,
- la carte à puce envoie une réponse à cette requête,
- on met en veille la carte à puce en fonction de la nature de la réponse.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'une architecture d'un téléphone mobile et d'une carte à puce phase 2+ ;
- Figure 2 : une structure d'un message envoyé par un téléphone mobile vers une carte à puce ;
- Figure 3 : une structure d'un message envoyé par une carte à puce vers un téléphone mobile ;
- Figure 4 : une représentation sous forme d'algorithme, d'un fonctionnement du procédé de l'invention.

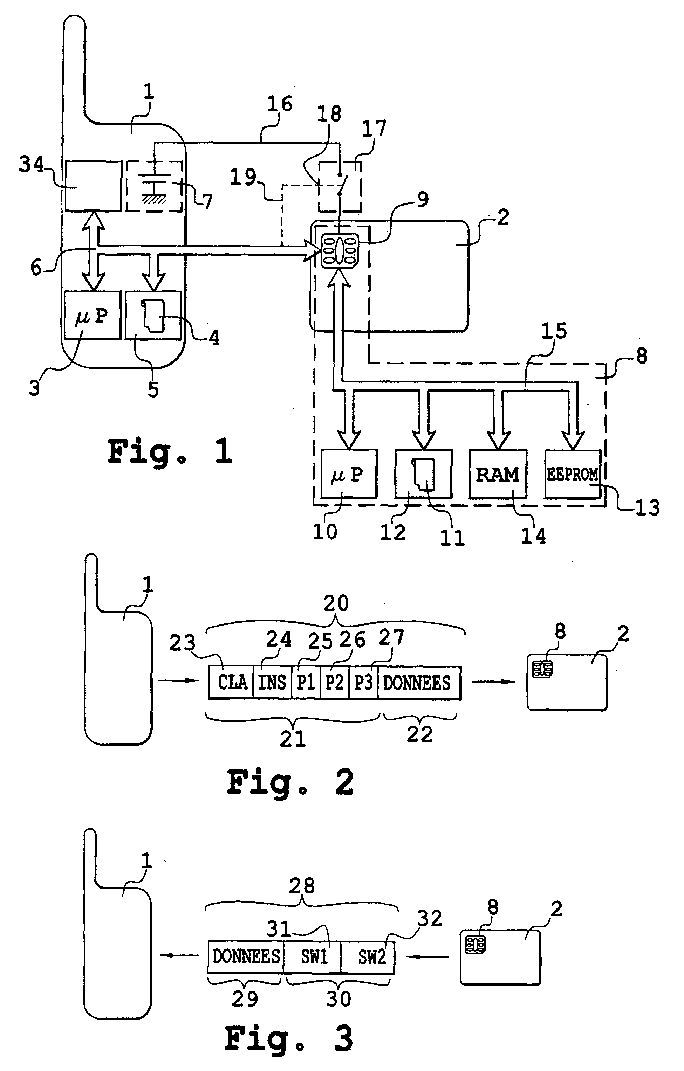

La figure 1 montre sous une forme schématique un téléphone 1 mobile comportant une carte 2 à puce. Le téléphone 1 comporte un microprocesseur 3 commandé par un programme 4 dans une mémoire de programmes 5 avec un bus 6 de données, d'adresses et de commandes. Le téléphone 1 comporte en outre un dispositif 7 d'alimentation. La carte 2 comporte un micromodule 8. Le micromodule 8 comporte un connecteur 9, un microprocesseur 10 commandé par un programme 11 dans une mémoire de programmes 12, une mémoire 13 non volatile de type EEPROM (Electrically Erasable Read Only Memory en anglais, mémoire à lecture seule programmable effaçable électriquement en français), une mémoire 14 de type RAM (Random Access Memory en anglais, mémoire à accès aléatoire en français mais on préférera l'expression mémoire volatile) et un bus 15 de données, d'adresses et de commandes. Le connecteur 9 permet une connexion électrique entre le bus 6 du téléphone 1 et le bus 15 de la carte 2. Le connecteur 9 comporte plusieurs broches métalliques dont une est reliée par une liaison 16 métallique au dispositif 7. Bien évidemment, pour pouvoir fournir une alimentation. Une liaison électrique entre le dispositif 7 et la carte 2 doit comporter deux liaisons. Une première liaison est formée par la liaison 16 et l'autre liaison, celle fixée à un potentiel de référence du dispositif 7, n'est pas décrite afin de ne pas alourdir la description.

En fait, une continuité électrique de la liaison 16 entre le dispositif 7 et le connecteur 9 est assurée par un interrupteur 17 dont une entrée 18 de commande est reliée au bus 6 par une liaison 19. Une ouverture ou une fermeture de l'interrupteur 17 est commandée par le microprocesseur 3 avec le programme 4.

Dans l'invention on considère un module 8 d'une carte 2 de type phase 2+ qui par rapport à une carte à puce phase 2 permet d'envoyer à un téléphone 1 des commandes. Le micromodule 8 peut envoyer au téléphone 1 un nombre de commandes possibles différent d'un autre micromodule 8. De plus avec les cartes phase 2+ le micromodule 8 doit garder en permanence dans la mémoire 14 des informations utiles pour gérer des applications commandées par le micromodule 8.

Dans un fonctionnement normal le téléphone 1 et le micromodule échangent des informations en respectant un protocole de communication défini dans la norme ISO7816-3. Avec cette norme, on définit notamment une transmission par caractère avec détection d'erreur. Cette norme prévoit qu'un échange d'informations avec le téléphone 1 et le micromodule 8 se fasse toujours sur l'initiative du téléphone 1. Ainsi, on définit un message de commande et un message de réponse.

La figure 2 montre un exemple d'une structure d'un message 20 de commande envoyé au micromodule 8 par le téléphone 1. Ce message 20 comporte un en-tête 21 et un champ 22 facultatif de données. L'en-tête 21 comporte cinq champs 23 à 27 d'un octet chacun. Le champ 23 reçoit une valeur précisant un type d'application. Le champ 24 reçoit une valeur précisant l'instruction à exécuter. Le champ 25 et le champ 26 reçoivent des valeurs permettant de préciser des paramètres de l'instruction définie dans le champ 24. Les valeurs dans le champ 25 et le champ 26 sont facultatives. Le champ 27 reçoit une valeur permettant de donner la longueur en bit soit du message 20 soit d'un message de réponse auquel on s'attend. Une longueur en bit du champ 22 est variable, et reçoit une valeur correspondant à une donnée utile au micromodule 8 pour réaliser l'instruction placée dans le champ 24.

En réponse à ce message 20, le micromodule 8 de la carte 2 envoie au téléphone 1, dans la figure 3, un message 28 de réponse. Le message 28 comporte un champ 29 de données et un épilogue 30. L'épilogue 30 comporte un champ 31 et un champ 32 d'un octet chacun. Une valeur reçue dans le champ 31 et/ou 32 indique si l'instruction envoyée par le message 20 (figure 2) a été exécutée correctement ou non. Généralement une valeur reçue dans le champ 31 représente une exécution correcte ou une exécution . incorrecte de l'instruction et une valeur reçue dans le champ 32 représente généralement, lors d'une exécution incorrecte de l'instruction, une cause du problème rencontré. Le champ 29, tout comme le champ 22, est facultatif.

Selon la norme précitée une communication du téléphone 1 vers le micromodule 8 se fait toujours en décomposant un message à émettre tel que le message 20. De même une communication du micromodule 8 vers le téléphone 1 se fait toujours en décomposant un message émis tel que le message 28. Ainsi, pour pouvoir envoyer une commande au téléphone 1, le micromodule 8, lors de l'émission d'un message 28, place dans le champ 31 une valeur spéciale. Cette valeur spéciale est en général égale à 90 dans une représentation hexadécimale et indique au téléphone1 que le micromodule 8 souhaite envoyer une commande. Dès lors, le téléphone 1 envoie au micromodule 8 un message 20 dont un contenu du champ 24 indique au micromodule 8 que celui-ci peut émettre sa commande en utilisant un message 28 pour lequel le champ 29 est présent. Dans ce cas, on place dans le champ 29 une valeur représentative de la commande que le micromodule 8 veut envoyer au téléphone 1, cette commande étant le plus souvent nommée commande pro-active.

Lors d'une fermeture de l'interrupteur 17 sur ordre du microprocesseur 3 le téléphone 1 envoie au micromodule 8 un message 20. Ce message 20 indique au micromodule 8 notamment grâce au champ 22, quelles commandes pro-actives le téléphone 1 peut recevoir, les autres commandes pro-actives disponibles dans le micromodule 8 n'étant pas interprétables par le microprocesseur 3. Dans un deuxième temps le micromodule 8 envoie au microprocesseur 3 un message 28 représentant un message d'identification du micromodule 8. Dans ce message d'identification, dans l'invention, le micromodule 8 indique au microprocesseur 3 si le micromodule 8 peut gérer ou non en interne une mise en veille. Une telle gestion consiste principalement en une sauvegarde du contexte présent dans la mémoire 14. Le message d'identification peut être envoyé au téléphone 1 selon différentes manières. Dans une première solution, on place le message d'identification dans le champ 31 du message 28. Dans une deuxième solution, le téléphone 1 envoie un nouveau message 20 au micromodule 8 afin d'autoriser le micromodule 8 à répondre. La réponse du micromodule 8 est placée dans le champ 29 du message 28. Dans un exemple préféré un message d'identification a une longueur de deux bits. Dans la première solution, préférée, le microprocesseur 3 lit les deux bits correspondants, qu'on nommera par la suite B₀ et B₁, du champ 31 du message 28. Une valeur logique des bits B₀ et B₁ est soit une valeur logique 0 soit une valeur logique 1.

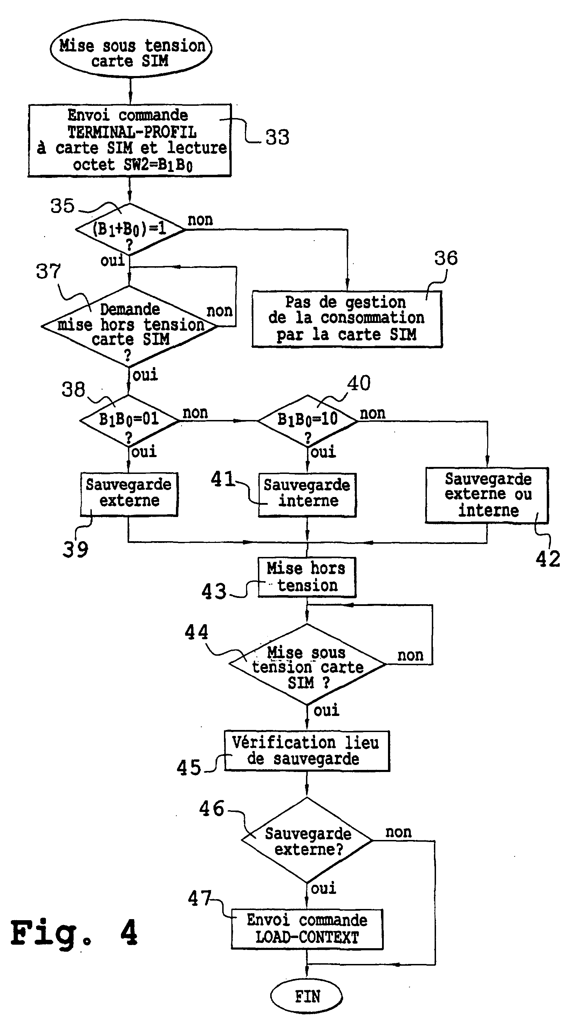

La figure 4 montre, sous forme d'un algorithme, un fonctionnement du procédé de l'invention. Dans une première étape 33 le téléphone 1 envoie un message d'information dit TERMINAL PROFILE au micromodule 8 en utilisant un message 20 et le micromodule 8 retourne en réponse un message d'identification en utilisant un message 28. Le microprocesseur 3 lit les bits B₀ et B₁ du champ 31 du message 28 reçu. Ces bits B₀ et B₁ sont codés, par exemple, de la manière suivante. Une valeur logique des bits B₀ et B₁ égale à 0 indique que le programme 11 du micromodule 8 ne gère pas une ouverture de l'interrupteur 17. Il s'agit généralement d'une carte à puce phase 2 ou d'une version antérieure. Une valeur logique du bit B₀ égale à 1 et une valeur logique du bit B₁ égale à 0 indique que le programme 11 peut gérer une ouverture de l'interrupteur 17 et donc une sauvegarde du contexte présent mais qu'il doit utiliser une mémoire de sauvegarde externe au micromodule 8. Pour cela le téléphone 1 comporte une mémoire 34 de sauvegarde d'informations relatives au micromodule 8. Une valeur logique du bit B₀ égale à 0 et une valeur logique du bit B₁ égale à 1 indique que programme 11 peut gérer, en interne, une sauvegarde du contexte présent dans la mémoire 14 en utilisant la mémoire 13 du micromodule 8. Par contre, dans ce cas, le programme 11 ne sait pas gérer en externe, c'est-à-dire avec la mémoire 34 du téléphone 1, une sauvegarde du contexte. Une valeur logique du bit B₀ et du bit B₁ égale à 1 indiquent que le programme 11 peut gérer une sauvegarde du contexte aussi bien en interne avec la mémoire 13 qu'en externe avec la mémoire 34.

Dans une étape 35 de test le microprocesseur 3 teste si au moins un des deux bits B₀ ou B₁ a une valeur logique égale à 1. Dans le cas d'une réponse négative à ce test, cela signifie que le micromodule 8 ne sait pas gérer une coupure d'alimentation. En conséquence, l'interrupteur 17 peut être commandé, dans une étape 36, à l'ouverture par le microprocesseur 3.

Dans le cas d'une réponse affirmative au test de l'étape 35, on réalise alors une étape 37 de test dans laquelle on attend que le téléphone 1 veuille envoyer au micromodule 8 une requête de mise en veille. Dès que le téléphone 1 envoie une requête de mise en veille au micromodule 8 alors le microprocesseur 3 réalise un test d'une valeur logique de chaque bit B₀ et B₁ dans une étape 38. Dans cette étape 38, le microprocesseur 3 compare les bits B₀ et B₁ avec les valeurs logiques 1 et 0 respectivement. Dans le cas où des valeurs logiques des bits B₀ et B₁ sont égales aux valeurs logiques comparées alors, dans une étape 39, le téléphone 1 envoie au micromodule 8 un message 20 correspondant à une requête de mise en veille. Dans ce message 20 on code, dans un exemple préféré, dans le champ 25 une information de lieu de sauvegarde. A l'issu de ce test le lieu de sauvegarde doit être la mémoire 34. Dans un exemple, une valeur dans le champ 25 pour indiquer qu'un lieu de sauvegarde correspond à la mémoire 34 est égale à la valeur décimale un. Dans le cas d'une réponse négative au test de l'étape 38 le microprocesseur 3 réalise, dans une étape 40, une comparaison entre des valeurs logiques des bits B₀ et B₁ et des valeurs logiques 0 et 1 respectivement. Dans le cas où les valeurs logiques des bits B₀ et B₁ correspondent aux valeurs comparées cela signifie que le programme 11 du micromodule 8 peut gérer en interne une ouverture de l'interrupteur 17. Dans ce cas le téléphone 1, dans une étape 41, envoie au micromodule 8 une requête de mise en veille en codant dans le champ 25 du message 20 une information indiquant que le lieu de sauvegarde correspond à la mémoire 13. Un code pour le message de l'étape 41 est différent du code pour le message de l'étape 39, par exemple on peut lui affecter une valeur décimale égale à zéro.

Dans le cas d'une réponse négative au test de l'étape 40 alors le programme 11 peut gérer une ouverture de l'interrupteur 17 soit en interne soit en externe. Dans ce cas un code de l'information du lieu de sauvegarde est égal soit à la valeur décimale zéro soit la valeur décimale un. Dans cette étape 42 le programme 11, dans un exemple préféré, gère une ouverture de l'interrupteur 17 en interne, c'est-à-dire qu'il utilise la mémoire 13 du micromodule 8. Pour coder l'information du lieu de sauvegarde, on a utilisé le champ 25 du message 20 mais on aurait très bien pu utiliser d'autres champs tels que le champ 26 ou le champ 22 voire une combinaison de ces champs. Des valeurs choisies pour coder cette information du lieu de sauvegarde dans les étapes 39, 41 et 42 est libre tant qu'elles permettent de distinguer un lieu de sauvegarde.

Ainsi, après l'envoi de ce message 20 au micromodule 8 le programme 11 commande, dans une étape 43, une sauvegarde des informations présentes dans la mémoire 14. Le microprocesseur 10 lit, dans le champ 25, une valeur de l'information du lieu de sauvegarde. Cette sauvegarde se fait soit dans la mémoire 13 soit dans la mémoire 34 en fonction de la valeur présente dans le champ 25. Si un lieu de sauvegarde est la mémoire 34, le microprocesseur 10 envoie au téléphone 1 toutes les données qui doivent être sauvegardées. Lorsqu'un lieu de sauvegarde correspond à la mémoire 13 le microprocesseur n'envoie aucun message au téléphone 1. Une fois la sauvegarde effectuée, le microprocesseur 3 commande l'ouverture de l'interrupteur 17.

Dans une variante, quel que soit un lieu de sauvegarde, le téléphone mobile attend un acquittement de la part du micromodule 8 avant d'ouvrir l'interrupteur 17. Cette attente peut être temporisée. L'écoulement de cette temporisation sans réponse peut être considéré comme une réponse. Le microprocesseur 3 lit le message d'acquittement émis par le micromodule 8 ou prend en compte cette réponse puis commande l'ouverture de l'interrupteur 17 à l'aide de la liaison 19 reliée au bus 6.

Dans une étape 44 le microprocesseur 3 contrôle une durée de veille du micromodule 8. Dans le cas où une durée de veille est écoulée, le microprocesseur 3 contrôle, dans une étape 45, en fonction des valeurs logiques des bits B₀ et B₁ le lieu de sauvegarde des informations qui étaient présentes dans la mémoire 14 avant la mise en veille. Dans le cas d'une sauvegarde externe dans la mémoire 34 le microprocesseur 3 envoie un message 20 comportant le champ 22. On place dans le champ 22 les valeurs des informations mémorisées dans la mémoire 34. Le microprocesseur 10, lorsque le micromodule 8 reçoit le message 20, mémorise les informations présentes dans le champ 22 du message 20 dans la mémoire 14. Le microprocesseur 10 replace ainsi, dans une étape 47, le micromodule 8 dans l'état où il était avant la mise en veille. Dans le cas où le test à l'étape 46 indique que la sauvegarde a été effectuée en interne dans la mémoire 13 alors le microprocesseur 3 n'envoie pas le message 20 de l'étape 47 au micromodule 8.

Dans une variante, on sauvegarde dans une mémoire, par exemple la mémoire 13, du micromodule 8 une information relative à une clef de cryptage et un algorithme de cryptage associé. Ainsi lors d'une sauvegarde externe dans la mémoire 34 le programme 11 utilise cet algorithme de cryptage et cette clef de cryptage pour crypter des informations présentes dans la mémoire 14 avant de les placer sur le bus 6. On rend ainsi ces données inutilisables à l'extérieur du micromodule 8. Le microprocesseur 3 place ensuite ces données cryptées dans la mémoire 34. Lors d'une opération inverse, c'est-à-dire de récupération des informations cryptées dans la mémoire 34, après l'étape 17 notamment, le programme 11 utilise à nouveau l'algorithme de cryptage et la clef de cryptage pour décrypter les données reçues avant de les mémoriser dans la mémoire 14.

## Revendications

1. Procédé de gestion d'une consommation électrique d'une carte (2) à puce dans un téléphone (1) mobile dans lequel :
- on envoie à la carte (2) à puce un message d'information concernant le téléphone (1) mobile,
- on lit un contenu d'un message d'identification envoyé par la carte (2) à puce au téléphone (1) mobile,
**caractérisé en ce que** :
- on envoie à la carte (2) à puce une requête de mise en veille,
- la carte à puce envoie une réponse à cette requête,
- on met en veille la carte (2) à puce en fonction de la nature de la réponse.

2. Procédé selon la revendication 1 **caractérisé en ce que** lors de l'envoi de la requête de mise en veille de la carte (2) à puce par le téléphone (1) mobile :
- on envoie à la carte (2) à puce une requête (20) comportant plusieurs champs (23-27) d'en-tête de longueur un octet plus un champ (22) de donnée facultatif de longueur variable,
- on code dans la requête (20), éventuellement en fonction d'un contenu du message d'identification, une information d'un lieu où doivent être mémorisées des informations à sauvegarder et on obtient une information codée,
- on sauvegarde un contexte de travail de la carte (2) à puce, en tant qu'informations à sauvegarder, dans une mémoire (34) de sauvegarde du téléphone (1) mobile ou dans une mémoire (13) de sauvegarde interne à la carte (2) à puce en fonction de l'information codée,
- on met en oeuvre un procédé de coupure d'une alimentation (7) de la carte (2) à puce.

3. Procédé selon la revendication 2 **caractérisé en ce que** :
- on code une information d'un lieu de sauvegarde dans au moins un champ (25) d'en-tête de la requête (20).

4. Procédé selon la revendication 2 ou 3 **caractérisé en ce que** :
- on code une information d'un lieu de sauvegarde (13, 34) dans un champ de donnée (22) de la requête (20).

5. Procédé selon l'une des revendications 2 à 4 **caractérisé en ce que** lors d'une sauvegarde dans la mémoire (34) de sauvegarde du téléphone (1) mobile :
- on sauvegarde dans une mémoire (13) de la carte (2) à puce une information relative à une clé de cryptage et à un algorithme de cryptage associé,
- on crypte des informations, relatives au contexte de travail, dans la carte (2) à puce en utilisant l'algorithme de cryptage et la clé de cryptage internes à la carte (2) à puce,
- on place dans la mémoire (34) de sauvegarde du téléphone (1) mobile le contexte de travail ainsi crypté.

## Patentansprüche

1. Verfahren zur Steuerung des Stromverbrauchs einer Chipkarte (2) in einem Mobiltelefon (1), bei dem
- eine lnformationsnachricht betreffend das Mobiltelefon (1) an die Chipkarte (2) gesendet wird,
- ein Inhalt einer von der Chipkarte (2) zum Mobiltelefon (2) gesendeten Identifikationsnachricht gelesen wird,
**dadurch gekennzeichnet, daß**
- eine -Bereitschaftsanforderung an die Chipkarte (2) gesendet wird,
- die Chipkarte eine Antwort auf diese Anforderung sendet,
- die Chipkarte (2) in Abhängigkeit von der Art der Antwort in den Bereitschaftszustand versetzt wird.

2. Verfahren nach Anspruch 1, **dadurch gekennzeichnet, daß** beim Senden der Bereitschaftsanforderung an die Chipkarte (2) durch das Mobiltelefon (1):
- an die Chipkarte (2) eine Anforderung-(20) gesendet wird, die mehrere Felder (23- 27} mit einem Kopf einer Länge von einem Byte plus ein fakultatives Datenfeld (22) variabler Länge aufweist,
- in der Anforderung (20), ggf. in Abhängigkeit von einem Inhalt der Identifikationsnachricht, eine Information über einen Ort codiert wird, wo zu sichernde Informationen gespeichert werden sollen, und eine codierte Information erhalten wird,
- ein Arbeitskontext der Chipkarte (2) als zu sichernde Informationen in einem Sicherungsspeicher (34) des Mobiltelefons (1) oder in einem inneren Sicherungsspeicher (13) der Chipkarte (2) in Abhängigkeit von der codierten Information gesichert wird,
- ein Verfahren zum Abschalten einer Stromversorgung (7) der Chipkarte (2) verwendet wird.

3. Verfahren nach Anspruch 2, **dadurch gekennzeichnet, daß**:
- eine Information eines Sicherungsorts in mindestens einem Kopffeld (25) der Anforderung (20) codiert wird.

4. Verfahren nach Anspruch 2 oder 3, **dadurch gekennzeichnet, daß**:
- eine Information eines Sicherungsorts (13, 34) in einem Datenfeld (22) der Anforderung (20) codiert wird.

5. Verfahren nach einem der Ansprüche 2 bis 4, **dadurch gekennzeichnet, daß** bei einer Sicherung im Sicherungsspeicher (34) des Mobiltelefons (1):
- in einem Speicher (13) der Chipkarte (2} eine Information bezüglich eines Chiffrierschlüssels und eines zugeordneten Verschlüsselungsalgorithmus gesichert wird,
- unter Verwendung des Verschlüsselungsalgorithmus und des Chiffrierschlüssels innerhalb der Chipkarte (2) Informationen bezüglich des Arbeitskontextes in der Chipkarte (2) verschlüsselt werden,
- der so verschlüsselte Arbeitskontext in den Sicherungsspeicher (34) des Mobiltelefons (1) gebracht wird.

## Claims

1. Method for managing electrical consumption of a chip card (2) in a mobile telephone (1) in which:
- a message with information concerning the mobile telephone (1) is sent to the chip card (2),
- a content of an identification message sent by the chip card (2) to the mobile telephone (1) is read,
**characterised in that**:
- a request to switch to standby is sent to the chip card(2),
- the chip card sends a response to that request,
- the chip card (2) is switched to standby according to the nature of the response.

2. Method according to claim 1, **characterised in that** when the request to switch the chip card (2) to standby is sent by the mobile telephone (1):
- the chip card (2) is sent a request (20) comprising a plurality of header fields (23-27) with a length of one byte plus an optional data field (22) of variable length,
- information about a location in which information to be saved must be stored is coded in the request (20), possibly as a function of a content of the identification message, and coded information is obtained,
- a working context for the chip card (2), as information to be saved, is saved in a backup memory (34) of the mobile telephone (1) or in an internal backup memory (13) in the chip card (2) as a function of the coded information,
- a process for cutting a power supply (7) of the chip card (2) is implemented.

3. Method according to claim 2, **characterised in that**:
- information about a backup location is coded in at least one header field (25) of the request (20).

4. Method according to claim 2 or 3, **characterised in that**:
- information about a backup location (13, 34) is coded in a data field (22) of the request (20).

5. Method according to one of claims 2 to 4, **characterised in that** when saving in the backup memory (34) of the mobile telephone (1):
- information relating to an encrypting key and to an associated encrypting algorithm is saved in a memory (13) of the chip card (2),
- information relating to the working context is encrypted in the chip card (2) using the encrypting algorithm and the encrypting key inside the chip card (2),
- the working concept thus encrypted is placed in the backup memory (34) of the mobile telephone (1).
